# EUROPEAN PATENT SPECIFICATION

(11) **EP 1 960 598 B1**
(45) Date of publication and mention of the grant of the patent: **17.10.2012**
(21) Application number: 06817598.3
(22) Date of filing: 07.12.2006
(51) Int. Cl.: B29C 70/50, D06M 15/423, D06M 10/00, D21H 25/06

(54) **PRE-PREG AND LAMINATE MANUFACTURE**
PRE-PREG UND LAMINATHERSTELLUNG
FABRICATION DE PRÉIMPRÉGNÉS ET DE STRATIFIÉS

(30) Priority: 07.12.2005 AU 2005906886
(43) Date of publication of application: 27.08.2008
(73) Proprietor: Depco-Trh Pty Ltd, Williamstown, Victoria 3016 (AU)
(72) Inventor: PRICE, David, Elwyn, Williamstown, Victoria 3016 (AU)
(74) Representative: Demski, Siegfried
(86) International application number: PCT/AU2006/001864
(87) International publication number: WO 2007/065222

(56) References cited:
- EP-A1- 1 264 930
- WO-A-2004/106027
- WO-A1-92/09645
- WO-A1-99/10589
- DE-A1- 19 710 549
- US-A- 4 278 733
- US-A- 4 687 685
- US-A- 4 738 868
- DATABASE WPI Week 198312, Derwent Publications Ltd., London, GB; Class A87, AN 1983-28493K, XP003014340 & JP 58 023 790 A (TOPPAN PRINTING KK) 12 February 1983
- DATABASE WPI Week 198317, Derwent Publications Ltd., London, GB; Class A87, AN 1983-40398K, XP003014341 & JP 58 046 182 A (TOPPAN PRINTING KK) 17 March 1983
- DATABASE WPI Week 198809, Derwent Publications Ltd., London, GB; Class A82, AN 1988-059012, XP003014342 & JP 63 012 766 A (MATSUMURA SEKIYU KE) 20 January 1988

## Description

### Field of the invention

The invention relates to the manufacture of partially cured resin impregnated papers or non-wovens used for decorative and industrial laminates.

The impregnated and optionally coated paper or non-woven, known as a b-stage pre-preg, is subsequently fully cured under pressure in a hot press to form a laminate. The full and final curing of the laminate in a hot press while under pressure enables the b-stage pre-preg to bond with other b-stage pre-pregs, and/or a carrier substrate such as particleboard, fibreboard or oriented strand board.

The invention therefore also relates to laminate products manufactured using the partially cured resin impregnated papers or non-wovens formed according to the invention.

Any reference herein to a prior document or other prior disclosure is not to be taken as an admission that the content of the document or the disclosure is common general knowledge, either in Australia or elsewhere.

### Background of the invention

The optimal process technology for bringing impregnated papers or non-woven materials used in laminate manufacture to the so-called b-stage includes all of single bath, single bath and coating, and single bath and multiple coating options. "Single bath" also embraces multiple dipping in a single bath or split baths. Papers or non-wovens may be developed that only require coating of the resin onto a pretreated surface thereby avoiding the usual first bath saturation.

The basic option is to saturate the paper or non-woven in a bath of resin, usually urea formaldehyde (UF) resin, melamine formaldehyde (MF) resin, phenol formaldehyde (PF) resin or any combination of these, before controlling the resin pickup via a set of metering rollers. The resin impregnated paper or non-woven is then passed through a set of ovens, each oven or zone set at temperatures that enable the solvent to volatilise and the resin to progress in the degree of cure. The rate of progress of the paper or non-woven through the oven, and the temperature profile, can be carefully controlled to prevent premature skinning of the surface through resin polymerisation in the outer layer. If this occurs, remaining internal water has to force itself out through the skinned film which causes a problem with dusting arising from broken off particles of dried resin, and in some cases also filler particles. This is avoided by having a graduated drying profile over significant drying oven length - the productivity comes from line speed which is limited by the number of drying ovens and their temperatures.

It is important to avoid the dusting effect because this would present a significant occupational health and safety issue. Dusting can cover parts of equipment such as safety beams used as breakers if a worker enters a dangerous part of the machine, and a health issue inevitably arises from dust particles in the air.

The impregnated paper or non-woven at the end of the impregnation process has a known amount of remaining volatiles and a known degree of cure. This partially dried and partially cured impregnated paper or non-woven is known as a b-stage pre-preg.

Among further options in the impregnation process to achieving the desired b-stage pre-preg, there is the option to further coat the impregnated paper or non-woven before any partial drying and partial curing takes place, so-called wet-on-wet processing, before partial drying and partial curing in a set of heated ovens, whether gas fired, oil fired or heated by other means.

The state of the art is not limited to the abovementioned descriptions, as one skilled in the art would know. Numerous combinations of resin types, resin content, resin additives, additives for specific purposes, such as corundum for improved abrasion resistance, and remaining volatiles and degree of cure are preferred for different strategies in producing the final laminate.

There are several aspects in the current method of manufacturing b-stage impregnated papers that are econommically disadvantageous.

First is the high costs of energy arising from the set of ovens.

Second is the large footprint in the form of the long series of drying ovens required to achieve high operating speed.

Third is that the gas fired or oil fired drying ovens are always used at maximum operating width, a disadvantage when treating a paper or non-woven at a web width less than the maximum of the drying oven.

There have been disclosures of using infrared radiation in the production of a laminate. US 4,687,685 mentions the use of infrared radiation to heat and thin out the highly viscous coating of resin so that it will start to migrate into the paper to ensure proper saturation. US 4,278,733 describe the production of a laminate especially useful as an insulating material for transformers in which a multi-component curable resin mixture is heated to form a b-stage. Infrared heating is mentioned as on of several alternative approaches to providing this heating.

US 84738868 relates to a continues process for the preparation of a metric resin impregnated fibre pre-pregs, comprising impregnating fibre reinforcing material of a solution of a thermoplastic or thermosetting plastic precursors dissolved in an organic solvent and evaporating and recovering the solvent, wherein the evaporation of the solvent is achieved by exposing pre-pregs to visible or infrared light of a waveband, which corresponds to the peak absorption frequency of the solvent

It is known per se that NIR irradiation, eg applied from halogen-tube radiators, is an effective mechanism for drying or curing a variety of systems: an early disclosure was in US patent 6,436,485 for the purpose of cross-linking and curing the powder in powder coating of thermally sensitive substrates. Other disclosures of interest include WO 2004/106027 [post forming of thermosetting laminates using NIR radiation], and WO 03/000612 [curing adhesive or sealing agents using NIR radiation].

It is an objective of the invention to at least in part alleviate the above mentioned disadvantages.

### Summary of the invention

In accordance with the invention as defined by the present claims, NIR irradiation can be usefully applied to the production of pre-pregs with significant process advantages without incurring the skinning and consequent dusting problems that might have been expected to arise with the higher drying and curing rates that can be achieved with NIR irradiation.

The invention accordingly provides, in a first aspect, as defined in claim 1 a method of manufacturing a b-stage pre-preg of resin impregnated paper or non-woven, which pre-preg that is suitable for inclusion in a decorative or industrial laminate, characterised by impregnating a paper or non-woven with a resin carried by a solvent, which resin includes one or more of melamine formaldehyde, urea formaldehyde, and phenol formaldehyde or any combination of these, and thereafter irradiating the resin impregnated paper or non-woven with near infra-red (NIR) radiation to partially remove solvent by evaporation of the solvent, and to advance the resin impregnated paper to b-stage cure of the resin, whereby to produce a partially dried and partially cured b-stage resin impregnated paper pre-preg suitable for subsequent further final curing in the formation of a decorative or industrial laminate

In its first aspect, the invention further provides as defined in claim 10, an apparatus for manufacturing a b-stage pre-preg of resin impregnated paper or non-woven, which pre-preg that is suitable for inclusion in a decorative or industrial laminate, including a resin impregnation station for impregnating a paper or non-woven with resin carried by a solvent, which resin includes one or more of melamine formaldehyde, urea formaldehyde and phenol formaldehyde or any combination of these, and a heating and curing station having irradiation means to irradiate the resin-impregnated paper or non-woven with near infra-red (NIR) radiation to partially remove solvent by evaporation of the solvent, and to advance cure of the resin the resin impregnated paper to b-stage, whereby to produce a partially dried and partially cured b-stage resin impregnated paper pre-preg suitable for subsequent further final curing in the formation of a decorative or industrial laminate.

By "near infra-red" is herein meant the wavelength range between the visible region and 2.5 µm, is 0.7 to 2.5µm.

It is thought that the skinning and consequent dusting problems that might have been expected to arise with the higher drying and curing rates that can be achieved with NIR irradiation do not arise because NIR radiation does not rely on thermal conduction to the interior as do conventional ovens and infra-red heating systems, but is directed immediately into the whole body of the wet resin to achieve simultaneous drying and curing. As drying occurs, simultaneously the rate of curing increases.

A significant facility arising from the invention is the ability, in a preferred embodiment of the invention, to achieve substantially uniform application of the NIR radiation through the impregnated paper, an outcome not possible in current state of the art drying equipment.

A further advantage is the ability to apply the energy only across the width of the web rather than the width of the drying cabinet.

The NIR radiation is thought to cause flash evaporation of the solvent, which is most often water, by agitation of the solvent molecules, and to advance curing as the solvent is driven off by agitating the aminoplast resin molecules. Radiant heat from the NIR apparatus also provides energy to advance the cure of the resin.

The invention allows for a considerable reduction in the number of drying ovens required to achieve the desired properties of the partially dried and partially cured b-stage pre-preg. NIR irradiation may be employed alone or in conjunction with conventional non-NIR drying/curing ovens to achieve a pre-determined drying and curing program.

Typically, the apparatus further includes means for conveying the paper or non-woven as an elongated web through the resin impregnation station and the heating and curing station.

Preferably, the method includes controlling the amount of the resin outside the body or matrix of the paper or non-woven. For this purpose, metering means may be provided between the resin impregnation station and the heating and curing station. This controlling may comprise substantially removing resin outside the body or matrix of the paper or non-woven.

Instead of the usual 40 or 50 metres or more of drying ovens and a line speed of 50 m/min, giving a dwell time of approximately one minute, the dwell time using NIR irradiation may be able to be reduced to of the order of seconds or less.

The amount of NIR electromagnetic radiation will vary depending on the properties of the paper or non-woven being processed. A black paper will absorb more energy than a white paper or clear overlay paper, and thus the parameters for the individual paper or non-woven need to be taken into consideration. Options to manage the process include controlling the speed at which the impregnated and/or coated paper or non-woven passes through the NIR radiation unit or units, controlling the power output of the NIR unit or units, choice of NIR emitter (eg 800w, 1200w, 1800w, 2500w, 3600w, 4000w and 4400w) and whether the NIR radiation is applied from one side or both sides.

In an embodiment, the method may include applying one or more successive thin coats of resin to the at least partially dried and at least partially cured b-stage pre-preg produced at the heating and curing station. Such thin coats may be applied at a coverage in the range 2 to 10 g/m², preferably 4 to 8 g/m², most preferably 5 to 6 g/ₘ².

In a second aspect, the invention provides apparatus for applying a thin coat or multiple thin coats of resin to an at least partially dried and at least partially cured b-stage pre-preg, disposed downstream of a heating and curing station or stations that produced the pre-preg.

The resin impregnating the paper or non-woven may be a thermosetting resin component consisting of UF, MF, PF, or any combination of these, whether or not modified with other compatible resin systems.

Downstream of the heating and curing station there may be a station for manufacturing a decorative or industrial laminate from one or more of the pre-pregs. Indeed, the invention extends, in a third aspect, to a method of manufacturing a decorative or industrial laminate, characterised by employing one or more b-stage pre-preg papers or non-wovens produced according to the first aspect of the invention. Optionally, this method may further employ in the laminate one or more pre-preg papers or non-wovens produced by drying and curing in conventional non-NIR ovens. The final fully cured surface and surface characteristics may be obtained, for example, in a hot press.

### Brief description of the drawings

The invention will now be described, by way of example only, with reference to the accompanying drawings, in which:
Figure 1 is a schematic depiction of apparatus for manufacturing a b-stage pre-preg of resin impregnated paper or non-woven, according to an embodiment of the invention;
Figure 2 shows a modified form of the apparatus depicted in Figure 1, for additionally applying one or more thin coats to the pre-preg; and
Figure 3 is a diagrammatic plan view of one of the NIR irradiator units.

### Embodiments of the apparatus

The illustrated apparatus includes a resin impregnation station 10, and a heating and curing station 20. An elongated web 5 of paper or non-woven is drawn from a roll 6 through the successive stations 10, 20.

Resin impregnation station 10 comprises an aqueous or other solvent resin bath 12 in which web 5 is in contact twice with the resin 11 as illustrated to ensure paper saturation, a short contact against a pre-wet roll 13, followed by a longer dip 19. Web 5 then passes to metering means 14 comprising metering rollers 15 that are adjustable to control the amount of resin outside the body or matrix of the paper or non-woven web 5. It is found that best results are achieved downstream if the metering means is set to substantially remove resin outside the body or matrix of the paper and non-woven, i.e. there is left at most only a minimal surface coating of the resin on the paper or non-woven.

The resin is typically melamine formaldehyde (MF), urea formaldehyde (UF) or phenol formaldehyde (FF) resin, but these may be used in combination, or any other suitable or desired resin may be employed.

Downstream of metering rolls 15 the impregnated paper or non-woven 5' optionally contacts a set of smoothing rolls 16 and is then passed into a treatment tunnel 22 of heating and curing station 20. Here, the impregnated paper or non-woven 5' is irradiated from both sides by respective NIR irradiator units 24, 25 for a period typically in the range 0.2 to 1.5 seconds. This irradiation is effective to at least partially remove the resin solvent, typically water, by flash evaporation of the solvent, effected through agitation of the solvent molecules. The NIR radiation is further effective to advance cure of the resin, for example by agitating aminoplast molecules of the resin.

The web 5 is moved through the successive units by a web conveying configuration of suitable form. This is not illustrated in detail but components are depicted diagrammatically at some turning points, e.g. at 17.

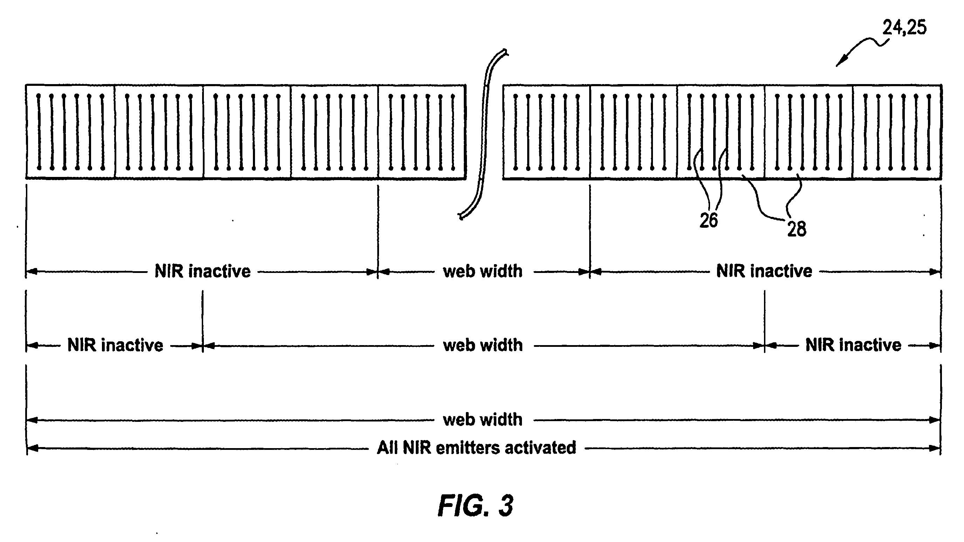

Each NIR irradiator unit 24, 25 conveniently comprises a bank of elongate NIR emitters 26 (Figure 3) preferably arranged in functional blocks 28 of six emitters each. The bank extends as an upper or lower bridge across the web path with the emitters aligned in the direction of web travel. Each block may, for example, extend 120mm laterally of the web, with each emitter, e.g., 250 mm long. With this arrangement, the NIR emitter 26, or at least the emitter blocks 28, that lie outside the impregnated web of paper or non-woven can be turned off, meaning that the radiation is only applied on the web and not significantly outside the web, thereby increasing energy productivity. Examples of different web widths are annotated in Figure 3.

The distance from the web to the emitters 26 is adjustable according to other parameters such as type of emitter, web speed and grammage or colour of the paper or non-woven material.

In a modified embodiment successive NIR irradiations are effected, either with separate irradiators in the one unit or at separate spaced heating and curing stations.

The irradiation is managed so as to convert the impregnated paper or non-woven 5' to an at least partially dried and at least partially cured b-stage pre-preg 5".

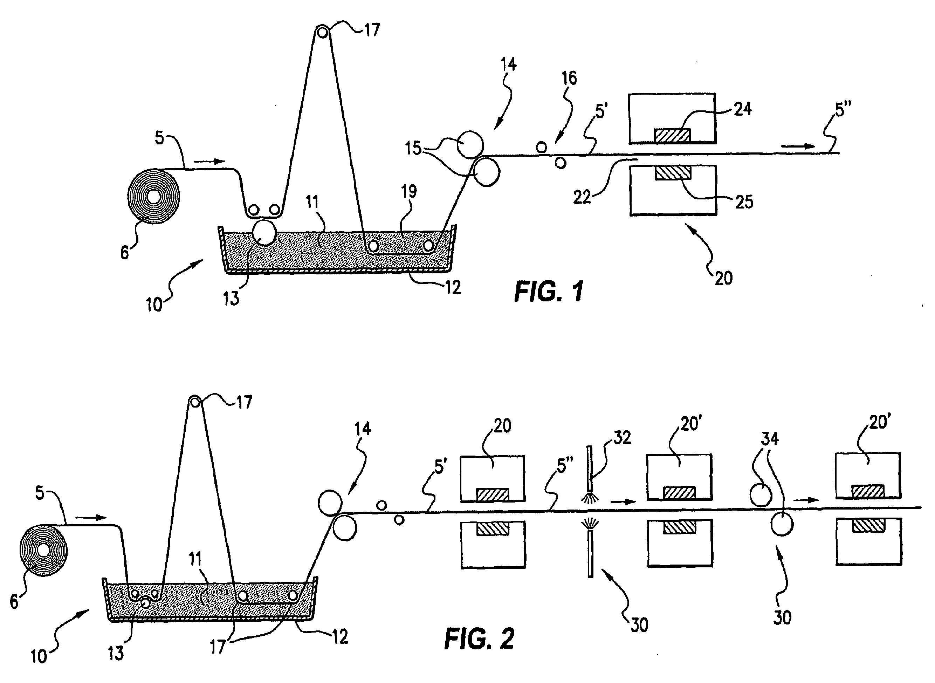

In a further modification, illustrated in Figure 2, the pre-preg 5" is successively treated by applying one or more thin coats of the resin at coating stations 30, and then partially drying and partially curing the respective coat at further NIR drying and curing stations 20' similar to station 20. Coating stations 30 may apply the coats by spraying (32) or by means of gravure rolls (34), and a thin coat is typically applied to both sides of the pre-preg. The number of thin coats can be as many as is required to obtain a desired amount of final resin uptake and coat weight. A typical individual applied thin coat has a coverage of the order of 2 - 10 g/m², preferably 4 - 8 g/m² most preferably 5 - 6 g/m².

### Examples

A web of white décor paper, of basis weight 80 gsm was impregnated with melamine formaldehyde resin in aqueous solvent, and then partially dried and partially cured by being passed twice between 4.4 kw NIR irradiators at 60 m/min. With the NIR irradiators operating at 80% power, the first pass exit temperature was measured as 75°C and the final exit temperature as 102°C. The end weight (paper, resin and water) was observed to be 165 gsm including 11% volatiles. Total residence time between the NIR irradiators was 0.5 seconds.

In a second trial, the same grad of MF impregnated while décor paper was passed once between similar NIR irradiators at a much slower speed, 37.5 m/min. The exit temperature was measured as 96°C and the end weight (paper, resin and water) 140 gsm. Volatiles comprised 8%. Residence time between the NIR irradiators was 0.8 seconds.

In both trials, no significant skinning or dusting was observed.

These trials demonstrate that NIR radiation is an extremely effective method of removing the solvent from the impregnated paper or non-woven over a comparatively short distance and with a comparatively short exposure time to the NIR energy source. A conventional set of drying ovens operating at the same or a similar web speed would remove similar amounts of solvent over a distance of 12 - 20 metres with a dwell time of 18 - 30 seconds.

## Claims

1. A method of manufacturing a b-stage resin impregnated paper that is suitable for inclusion in a decorative or industrial laminate, including impregnating a paper with a resin carried by a solvent, which resin includes one or more of melamine formaldehyde, urea formaldehyde, and phenol formaldehyde or any combination of these,
**characterised by** thereafter irradiating the resin impregnated paper to partially remove solvent by evaporation of the solvent, and to advance the resin impregnated paper to b-stage, whereby to produce a partially dried and partially cured b-stage resin impregnated paper suitable for subsequent final curing in the formation of a decorative or industrial laminate; the irradiation with near infrared radiation is in the wavelength range 0.7 - 2.5µm, whereby evaporation of the solvent is flash evaporation of the solvent by agitation of the solvent molecules, and whereby the irradiation is effective to produce the partially dried and partially cured b-stage resin impregnated paper without skinning and dusting in a time period less than 5 seconds.

2. A method according to claim 1 wherein said paper is an elongated web conveyed through a heating and curing station at which said irradiation is effected.

3. A method according to claim 1 or 2, further including controlling the amount of said resin outside the body or matrix of the paper.

4. A method according to claims 1, 2 or 3 further including applying one or more successive thin coats of resin to the partially dried and partially cured b-stage resin impregnated paper.

5. A method according to any one of claims 1 to 4 wherein said evaporation of the solvent is flash evaporation of the solvent by agitation of the solvent molecules.

6. A method according to one of claims 1 to 5 wherein the duration of said NIR radiation to procedure the partially dried and partially cured b-stage resin impregnated paper substantially without skinning and dusting is time period in the range of 0.2 to 1.5 seconds, wherein said resin-impregnated paper is irradiated with NIR radiation to procedure the partially dried and partially cured b-stage resin impregnated paper, for a time period less than 10 seconds.

7. A method according to any one of claims 1 to 6, wherein the resin-impregnated paper is irradiated in conjunction with being heated by conventional non-NIR drying/curing ovens, to achieve a pre-determined drying and curing program.

8. A method of manufacturing a decorative or industrial laminate, **characterised by** employing one or more partially dried and partially cured b-stage resin impregnated papers produced according to any one of claims 1 to 7.

9. A method according to claim 8 further employing in the laminate one or more further resin impregnated papers produced by drying and curing resin-impregnated paper in conventional non-NIR ovens.

10. Apparatus for manufacturing a b-stage resin impregnated paper that is suitable for inclusion in a decorative or industrial laminate, including a resin impregnation station for impregnating a paper with resin carried by a solvent, which resin includes one or more of melamine formaldehyde, urea formaldehyde and phenol formaldehyde or any combination of these,
**characterised by** a heating and curing station having irradiation means to irradiate the resin-impregnated paper with a near infra-red (NIR) radiation to partially remove solvent by evaporation of the solvent, and to advance the resin impregnated paper to b-stage, whereby to produce a partially dried and partially cured b-stage resin impregnated paper suitable for subsequent final curing in the formation of a decorative or industrial laminate, wherein said irradiation means comprises one or more near infrared irradiation units for irradiating the resin impregnated paper with near infrared radiation in the wavelength range 0.7 - 2.5µm whereby evaporation of the solvent is flash evaporation of the solvent by agitation of the solvent molecules, and whereby the irradiation is effective to produce the partially dried and partially cured b-stage resin impregnated paper without skinning and dusting in a time period less than 5 seconds.

11. Apparatus according to claim 10, further including means for conveying said paper as an elongated web through said resin impregnation station and said heating and curing station.

12. Apparatus according to claim 10, further including metering means between said stations for controlling the amount of said resin outside the body or matrix of the paper.

13. Apparatus according to claim 10, 11 or 12, further including means downstream of said heating and curing station for applying one or more successive thin coats of resin to the partially dried and partially cured b-stage resin impregnated paper produced at the heating and curing station.

14. Apparatus for applying a thin coat or multiple thin coats of resin to an at least partially dried and at least partially cured b-stage resin impregnated paper, disposed downstream of a heating and curing station or stations that produced the resin impregnated paper.

15. Apparatus according to claim 14 wherein said heating and curing station or stations effect drying and curing of the resin impregnated paper by irradiation with near infra-red (NIR) radiation.

## Patentansprüche

1. Herstellungsverfahren für ein mit Harz im B-Zustand imprägniertes Papier, das zur Einbringung in ein Dekor- oder Industrielaminat geeignet ist, umfassend das Imprägnieren eines Papiers mit einem von einem Lösungsmittel getragenen Harz, wobei das Harz eines oder mehrere von Melamin-Formaldehyd, Harnstoff-Formaldehyd und Phenol-Formaldehyd oder eine beliebige Kombination von diesen umfasst,
**gekennzeichnet durch** anschließendes Bestrahlen des mit Harz imprägnierten Papiers, um Lösungsmittel teilweise **durch** Verdampfung des Lösungsmittels zu entfernen und das mit Harz imprägnierte Papier weiter in den B-Zustand zu überführen, wodurch ein teilweise getrocknetes und teilweise ausgehärtetes, mit Harz im B-Zustand imprägniertes Papier erzeugt wird, das für eine nachfolgende abschließende Aushärtung zum Aufbau eines Dekor- oder Industrielaminats geeignet ist; wobei die Bestrahlung mit naher Infrarotstrahlung im Wellenlängenbereich von 0,7 - 2,5 µm liegt, wobei die Verdampfung des Lösungsmittels eine Entspannungsverdampfung des Lösungsmittels **durch** Rühren oder Schütteln der Lösungsmittelmoleküle ist, und wobei die Bestrahlung dahingehend wirksam ist, das teilweise getrocknete und teilweise ausgehärtete, mit Harz im B-Zustand imprägnierte Papier in einem Zeitraum von weniger als 5 Sekunden ohne Hautbildung und Staubung herzustellen.

2. Verfahren nach Anspruch 1, wobei das Papier eine verlängerte Bahn ist, die durch eine Heiz- und Aushärtestation transportiert wird, in der die Bestrahlung erfolgt.

3. Verfahren nach Anspruch 1 oder 2, des Weiteren umfassend das Steuern der Menge an Harz außerhalb des Körpers oder der Matrix des Papiers.

4. Verfahren nach Anspruch 1, 2 oder 3, des Weiteren umfassend das Aufbringen von einer oder mehreren aufeinanderfolgenden dünnen Harzüberzügen auf das teilweise getrocknete und teilweise ausgehärtete, mit Harz im B-Zustand imprägnierte Papier.

5. Verfahren nach einem der Ansprüche 1 bis 4, wobei die Verdampfung des Lösungsmittels eine Entspannungsverdampfung des Lösungsmittels durch Rühren oder Schütteln der Lösungsmittelmoleküle ist.

6. Verfahren nach einem der Ansprüche 1 bis 5, wobei die Dauer der NIR-Strahlung zur Bearbeitung des teilweise getrockneten und teilweise ausgehärteten, mit Harz im B-Zustand imprägnierten Papiers im Wesentlichen ohne Hautbildung und Staubung ein Zeitraum im Bereich von 0,2 bis 1,5 Sekunden ist, wobei das mit Harz imprägnierte Papier mit NIR-Strahlung für einen Zeitraum von weniger als 10 Sekunden bestrahlt wird, um das teilweise getrocknete und teilweise ausgehärtete, mit Harz im B-Zustand imprägnierte Papier herzustellen.

7. Verfahren nach einem der Ansprüche 1 bis 6, wobei das mit Harz imprägnierte Papier im Zusammenhang mit dessen Erwärmung durch herkömmliche Trocken-/Aushärtungsöfen ohne NIR bestrahlt wird, um ein vorbestimmtes Trocken- und Aushärtungsprogramm zu erreichen.

8. Herstellungsverfahren für ein Dekor- oder Industrielaminat, **gekennzeichnet durch** die Verwendung von einem oder mehreren, teilweise getrockneten und teilweise ausgehärteten, mit Harz im B-Zustand imprägnierten Papieren, die nach einem der Ansprüche 1 bis 7 hergestellt wurden.

9. Verfahren nach Anspruch 8, das des Weiteren ein oder mehrere weitere mit Harz imprägnierte Papiere in dem Laminat verwendet, die durch Trocknen und Aushärten von mit Harz imprägniertem Papier in herkömmlichen Öfen ohne NIR hergestellt wurden.

10. Einrichtung zur Herstellung eines mit Harz im B-Zustand imprägnierten Papiers, das zur Einbringung in ein Dekor- oder Industrielaminat geeignet ist, umfassend eine Harzimprägnierstation zum Imprägnieren eines Papiers mit einem von einem Lösungsmittel getragenen Harz, wobei das Harz eines oder mehrere von Melamin-Formaldehyd, Harnstoff-Formaldehyd und Phenol-Formaldehyd, oder eine beliebige Kombination von diesen,
**gekennzeichnet durch** eine Heiz- und Aushärtestation mit Bestrahlungsmitteln zum Bestrahlen des mit Harz imprägnierten Papiers mit einer nahen Infrarotstrahlung (NIR) zum teilweisen Entfernen von Lösungsmittel **durch** Verdampfen des Lösungsmittels, und zum weiteren Überführen des mit Harz imprägnierten Papiers in den B-Zustand, wodurch ein teilweise getrocknetes und teilweise ausgehärtetes, mit Harz im B-Zustand imprägniertes Papier erzeugt wird, das zum nachfolgenden abschließenden Aushärten zum Aufbau eines Dekor - oder Industrielaminats geeignet ist, wobei die Bestrahlungsmittel eine oder mehrere nahe Infrarotbestrahlungseinheiten zum Bestrahlen des mit Harz imprägnierten Papiers mit naher Infrarotstrahlung im Wellenlängenbereich von 0,7 - 2,5 µm aufweisen, wodurch die Verdampfung des Lösungsmittels eine Entspannungsverdampfung des Lösungsmittels **durch** Rühren oder Schütteln der Lösungsmittelmoleküle ist, und wodurch die Bestrahlung dahingehend wirksam ist, das teilweise getrocknete und teilweise ausgehärtete, mit Harz im B-Zustand imprägnierte Papier in einem Zeitraum von weniger als 5 Sekunden ohne Hautbildung und Stauben herzustellen.

11. Einrichtung nach Anspruch 10, des Weiteren aufweisend Mittel zum Transportieren des Papiers als eine verlängerte Bahn durch die Harzimprägnierstation und die Heiz- und Aushärtestation.

12. Einrichtung nach Anspruch 10, des Weiteren umfassend Messmittel zwischen den Stationen zum Steuern der Menge des Harzes außerhalb des Körpers oder der Matrix des Papiers.

13. Einrichtung nach Anspruch 10, 11 oder 12, des Weiteren aufweisend Mittel stromabwärts der Heiz- und Aushärtestation zum Aufbringen einer oder mehrerer aufeinanderfolgender dünner Harzüberzüge auf das teilweise getrocknete und teilweise ausgehärtete, mit Harz im B-Zustand imprägnierte Papier, das an der Heiz- und Aushärtestation erzeugt wurde.

14. Einrichtung zur Aufbringung eines dünnen Überzugs oder mehrerer dünner Harzüberzüge auf ein zumindest teilweise getrocknetes und zumindest teilweise ausgehärtetes, mit Harz im B-Zustand imprägniertes Papier, die stromabwärts einer Heiz- und Aushärtestation oder -stationen angeordnet ist, die das mit Harz imprägnierte Papier hergestellt hat/haben.

15. Einrichtung nach Anspruch 14, wobei die Heiz- und Aushärtestation oder die Heiz- und Aushärtestationen das Trocknen und Aushärten des mit Harz imprägnierten Papiers durch Bestrahlung mit naher Infrarotstrahlung (NIR) bewirken.

## Revendications

1. Procédé de fabrication de papier imprégné de résine à l'état B, lequel papier convient pour être inclus dans un stratifié décoratif ou industriel, consistant à imprégner un papier avec une résine portée par un solvant, laquelle résine comprend une ou plusieurs résines de mélamine-formaldéhyde, d'urée-formaldéhyde et de phénol-formaldéhyde ou une association quelconque de celles-ci,
**caractérisé par** l'irradiation subséquente du papier imprégné de résine pour enlever partiellement le solvant par évaporation de celui-ci, et pour faire progresser le papier imprégné de résine à l'état B, pour ainsi produire un papier imprégné de résine à l'état B partiellement séché et partiellement durci convenant pour le durcissement final subséquent au cours de la formation d'un stratifié décoratif ou industriel, l'irradiation avec un rayonnement infrarouge proche étant de l'ordre d'une longueur d'onde de 0,7 à 2,5 µm, l'évaporation du solvant étant une évaporation flash du solvant par l'agitation des molécules de solvant, et l'irradiation servant à produire le papier imprégné de résine à l'état B partiellement séché et partiellement durci sans formation d'une peau ni poudrage pendant un intervalle de temps inférieur à 5 secondes.

2. Procédé selon la revendication 1, dans lequel ledit papier est une bande allongée transportée à travers une station de chauffage et de durcissement dans laquelle ladite irradiation est réalisée.

3. Procédé selon la revendication 1 ou 2, comprenant en outre la commande de la quantité de ladite résine hors du corps ou de la matrice du papier.

4. Procédé selon la revendication 1, 2 ou 3, comprenant en outre l'application d'une ou de plusieurs fines couches successives de résine sur le papier imprégné de résine à l'état B partiellement séché et partiellement durci.

5. Procédé selon l'une quelconque des revendications 1 à 4, dans lequel ladite évaporation du solvant est une évaporation flash du solvant par l'agitation des molécules de solvant.

6. Procédé selon l'une des revendications 1 à 5, dans lequel la durée dudit rayonnement NIR pour traiter le papier imprégné de résine à l'état B partiellement séché et partiellement durci essentiellement sans formation d'une peau ni poudrage est l'intervalle de temps de l'ordre de 0,2 à 1,5 secondes, dans lequel ledit papier imprégné de résine est irradié avec une rayonnement infrarouge proche (NIR) pour traiter le papier imprégné de résine à l'état B partiellement séché et partiellement durci, dans un intervalle de temps inférieur à 10 secondes.

7. Procédé selon l'une quelconque des revendications 1 à 6, dans lequel le papier imprégné de résine est irradié en même temps qu'il est chauffé par des fours traditionnels de séchage/de durcissement sans rayonnement infrarouge proche, pour réaliser un programme de séchage/de durcissement prédéterminé.

8. Procédé de fabrication d'un stratifié décoratif ou industriel, **caractérisé par** l'utilisation d'un ou de plusieurs papiers imprégnés de résine à l'état B partiellement séchés et partiellement durcis produits selon l'une quelconque des revendications 1 à 7.

9. Procédé selon la revendication 8, utilisant en outre dans le stratifié un ou plusieurs papiers imprégnés de résine supplémentaires produits en séchant et en durcissant du papier imprégné de résine dans des fours traditionnels sans rayonnement infrarouge proche.

10. Appareil de fabrication de papier imprégné de résine à l'état B, lequel papier convient pour être inclus dans un stratifié décoratif ou industriel, comprenant une station d'imprégnation de résine pour imprégner un papier avec une résine portée par un solvant, laquelle résine comprend une ou plusieurs résines de mélamine-formaldéhyde, d'urée-formaldéhyde et de phénol-formaldéhyde ou une association quelconque de celles-ci,
**caractérisé par** une station de chauffage et de durcissement ayant un moyen d'irradiation destiné à irradier le papier imprégné de résine avec un rayonnement infrarouge proche (NIR) pour retirer en partie le solvant par évaporation du solvant, et pour faire progresser le papier imprégné de résine à l'état B, pour produire un papier imprégné de résine à l'état B partiellement séché et partiellement durci convenant pour le durcissement final subséquent au cours de la formation d'un stratifié décoratif ou industriel, dans lequel ledit moyen d'irradiation comprend une ou plusieurs unités de rayonnement infrarouge proche pour irradier le papier imprégné de résine avec un rayonnement infrarouge proche de l'ordre d'une longueur d'onde de 0,7 à 2,5 µm l'évaporation du solvant étant une évaporation flash du solvant par l'agitation des molécules de solvant, et l'irradiation servant à produire le papier imprégné de résine à l'état B partiellement séché et partiellement durci sans formation d'une peau ni poudrage pendant un intervalle de temps inférieur à 5 secondes.

11. Appareil selon la revendication 10, comprenant en outre un moyen pour transporter ledit papier sous forme de bande allongée à travers ladite station d'imprégnation de résine et ladite station de chauffage et de durcissement.

12. Appareil selon la revendication 10, comprenant en outre un moyen de dosage entre lesdites stations pour commander la quantité de ladite résine hors du corps ou de la matrice du papier.

13. Appareil selon la revendication 10, 11 ou 12, comprenant en outre un moyen en aval de ladite station de chauffage et de durcissement pour appliquer une ou plusieurs fines couches successives de résine au papier imprégné de résine à l'état B partiellement séché et partiellement durci produit à la station de chauffage et de durcissement.

14. Appareil d'application d'une fine couche ou de multiples fines couches de résine sur le papier imprégné de résine à l'état B au moins partiellement séché et au moins partiellement durci, disposé en aval de la station ou de stations de chauffage et de durcissement qui ont produit le papier imprégné de résine.

15. Appareil selon la revendication 14, dans lequel la station ou les stations de chauffage et de durcissement réalisent le séchage et le durcissement du papier imprégné de résine par irradiation avec un rayonnement infrarouge proche (NIR).
